# EUROPEAN PATENT APPLICATION

(11) **EP 4 403 421 A1**
(43) Date of publication of application: **24.07.2024**
(21) Application number: 23152081.8
(22) Date of filing: 17.01.2023
(51) Int. Cl.: B60R 19/18

(54) **CRASH MANAGEMENT SYSTEM FOR A VEHICLE**

(71) Applicant: Constellium Singen GmbH, 78224 Singen (DE)
(72) Inventor: MUELLER, Andre, 78247 HILZINGEN (DE); FEUERSTEIN, Martin, 78224 SINGEN (DE)
(74) Representative: Constellium - Propriété Industrielle

(57) **Abstract**

The invention relates to a crash management system (100) for a vehicle, the crash management system (100) comprising: a crossbeam (10; 10a; 10b; 10c), which extends at least essentially in a transverse direction (Y), the crossbeam (10; 10a; 10b; 10c) having a front flange (12; 12b), a rear flange (14; 14b), and at least two transverse walls (16; 16a; 16b, 18; 18a; 18b), which connect the front flange (12; 12b) to the rear flange (14; 14b) and form at least one closed profile chamber (20), the at least two transverse walls (16; 16a; 16b, 18; 18a; 18b) being connected at least to the front flange (12; 12b) via respective production-related areas of transition (21; 21b), which are provided with a curve (R); and at least one flange-shaped extension (25; 25b, 26; 26b), which is disposed in the area of the front flange (12; 12b) and protrudes over the transverse wall (16; 16a; 16b, 18; 18a; 18b) adjacent to the extension (25; 25b, 26; 26b) in a vertical direction (Z) of the crossbeam (10; 10a; 10b; 10c).

## Description

### FIELD OF THE INVENTION

The invention relates to a crash management system for a vehicle, the crash management system being characterized by a crash behavior that is particularly advantageous in connection with a flange-shaped extension in the area of the front flange of its crossbeam.

### BACKGROUND

A crash management system having the features of the preamble of claim 1 is known from US 2005/0082850 A1. The known crash management system has a crossbeam, which has two profile chambers, a flange-shaped extension being formed in the area of a front flange of the crossbeam on the upper side thereof, the extension protruding over the upper transverse wall of the profile chambers and extending in the longitudinal direction of the crossbeam. According to the description of said document, this extension increases the front surface of the bumper and improves the strength of the crossbeam with the result that the wall thickness of the crossbeam can be reduced. Furthermore, it is common for areas of transition between the transverse walls and the front and rear flanges of such crossbeams, which are typically produced as extruded components made of aluminum, to be provided with curves or radii in corner areas of the cross section, in which the wall thickness of the crossbeam is increased, for production-related reasons. Since such a radius is also formed on the outer side of the crossbeam in the area of transition to the flange-shaped extension in the case of the cross section shown in said document, however, the center line of the upper transverse wall, in whose area the extension is located, runs at a right angle to the front flange and in extension of the upper transverse wall in the case of the crossbeam known from said document.

### DESCRIPTION OF THE INVENTION

The crash management system for a vehicle according to the invention having the features of claim 1 has the advantage that it is characterized by a particularly advantageous crash behavior. This advantageous crash behavior is characterized in that the transverse wall adjacent to the flange-shaped extension is essentially or largely deformed outward, i.e., away from the (closed) profile chamber, and not in the direction of the profile chamber in the event of a collision with a pole-shaped obstacle, for example.

The invention is based on the idea of positioning or configuring the area of connection between the transverse wall and the front flange in such a manner that while the area of connection between the front flange and the transverse wall adjacent to the flange-shaped extension will move in the direction of the profile chamber when a force or a moment is introduced in the area of the flange-shaped extension in the event of a crash, the remaining area of the transverse wall will bulge outward or be deformed outward.

Against the background of the explanations above, it is therefore provided a crash management system for a vehicle, the crash management system comprising: a crossbeam, which extends at least essentially in a transverse direction Y, the crossbeam having a front flange, a rear flange, and at least two transverse walls, which connect the front flange to the rear flange and form at least one closed profile chamber, the at least two transverse walls being connected at least to the front flange via respective production-related areas of transition, which are provided with a curve R; and at least one flange-shaped extension, which is disposed in the area of the front flange and protrudes over the transverse wall adjacent to the extension in a vertical direction Z of the crossbeam, wherein the transverse wall adjacent to flange-shaped extension has a first portion, which is disposed on the side facing the front flange and which is connected to the front flange via the area of transition, and a second portion, which is essentially horizontal and which is adjacent to the first portion in the direction of the rear flange, the two portions each having a center line, the two center lines not being aligned with each other, the center line of the first portion preferably running exclusively in a direction of the front flange away from the extension when viewed in a direction toward the front flange.

For clarification, an essentially horizontal second portion of the transverse wall refers to a situation of the second portion in the installed state in the vehicle, in which the second portion is disposed horizontally on the vehicle.

Furthermore, a center line within the meaning of the invention refers to a line where the portions of the material of the transverse wall located above and below the line are equal in the manner of a centroid with respect to a direction perpendicular to the line. Advantageous embodiments of the crash management system for a vehicle according to the invention are indicated in the dependent claims.

In principle, the center line of the first portion does not have to be fully straight. Preferably, however, the center line of the first portion is straight across at least 30 % of its length, preferably across its entire length. However, it is basically also possible for at least part of the center line of the first portion to be curved.

The configuration of the profile cross section of the crossbeam according to the invention is further characterized in that a cross-sectional surface of the crossbeam enclosed by the front flange, the rear flange and the two transverse walls decreases compared to a second portion, which is prolonged up to the front flange, because of the placement and/or the configuration of the first portion of the transverse wall. This can also include configurations of the first center line or the first portion in which the center line or the first portion does not extend exclusively in the direction of the front flange away from the extension but partially in a direction toward the extension or parallel to the second portion.

In another preferred geometrical configuration of a cross section of the transverse wall, the cross section of the first portion can be at least approximately triangular. In other words, this means that the first portion has an increased wall thickness in the direction toward the front flange.

In this version, the cross section of the first portion can have a hollow chamber, which preferably has a circular cross section, in order to reduce the weight and to save material. If the first portion of the crossbeam is configured in this manner, in which case it has an at least approximately triangular cross section, the transverse wall and the second portion together preferably form a plane outer surface in the first portion on the side facing away from the profile chamber.

As an alternative to a configuration of the cross section of the crossbeam in which part of its first portion is reinforced by having an increased wall thickness, the wall thickness of the two portions can be equal and an angle between tangents drawn to the center lines of the two portions can be between 5° and 45°. A configuration in which the first portion has a straight center line is preferred.

With regard to the intended crash properties or the intended deformation of the transverse wall, it is preferred, in principle, for the second portion of the transverse wall to extend at a right angle to the front flange.

Furthermore, a geometric configuration of the front flange in which the front flange and the at least one extension form a plane end face or end of the crossbeam is preferred.

It is sensible for the first portion to be constructively configured or disposed according to the invention in particular in the case of relatively high flange-shaped extensions compared to the height of the crossbeam between the transverse walls, in particular if the height of the at least one extension is at least 10 % of the height of the cross section of the crossbeam between the two transverse walls when viewed in the vertical direction of the crossbeam.

There is also a sensible value range with regard to the length of the first portion compared to the length of the second portion or the length of the transverse wall. According to said value range, the length of the first portion is between 10 % and 35 % of the length of the transverse wall.

Also, the front flange can have an extension in the area of each of the two transverse walls, the first portions preferably being disposed mirror-symmetrically with respect to a plane of symmetry of the crossbeam.

Such a flange-shaped extension on the crossbeam serves in particular to accommodate an attachment, the at least one extension having a through hole for attaching the attachment.

Furthermore, the outer cross section of the crossbeam is preferably essentially rectangular except in the area of the at least one extension and the first portion.

In principle, there are two preferred versions with regard to the production of a crossbeam configured in this manner. In a first version, the crossbeam is an extruded component made of aluminum or an aluminum alloy. In other words, this means that the crossbeam is a monolithic component.

In an alternative configuration, the crossbeam can be composed of multiple plate parts, which are preferably connected to each other by at least one weld. The plate parts can be made of either steel or aluminum. Theoretically, different materials are possible; however, they should be able to be welded to each other with a view to as good a strength or connection as possible.

In a preferred constructive configuration of the latest proposal, the front flange is formed by a first plate part, and a second plate part is connected to the front flange in the area of the front flange, the second plate part having a U-shaped cross-section, which forms the profile chamber together with the front flange.

Other advantages, features and details of the invention are apparent from the following description of preferred embodiments of the invention and from the drawings.

### DESCRIPTION OF THE DRAWINGS

Fig. 1 is a perspective illustration showing a cut through a crossbeam of a crash management system for a vehicle according to a first version;
Fig. 2 is an enlarged cross-sectional illustration of a section of the crossbeam according to Fig. 1;
Fig. 3 is a perspective view of a second embodiment of a crossbeam;
Fig. 4 is an enlarged cross-sectional illustration of a section of the crossbeam according to Fig. 3;
Fig. 5 is a cross-sectional illustration of a version of the crossbeam according to Fig. 4;
Fig. 6 is a cross-sectional illustration of a version of the crossbeam in which the first portion is curved; and
Fig. 7 is a perspective cut view of a crossbeam composed of multiple plate parts.

### DETAILED DESCRIPTION OF THE INVENTION

Identical elements and elements having the same function are provided with identical reference signs in the figures. These depicted embodiments are to be understood as illustrative of the invention and not as limiting in any way.

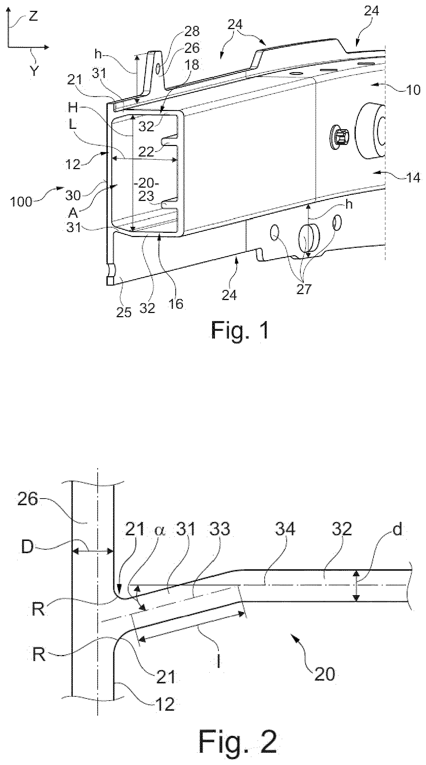

Fig. 1 shows a crash management system 100, which is preferably used in the front area of a vehicle (not shown). Crash management system 100 comprises a crossbeam 10 and typically two crash boxes (not shown as not essential to the invention), which are spaced apart from each other and via which crossbeam 10 can be attached to a vehicle structure (longitudinal beam) of the vehicle.

Crossbeam 10 is an extruded component and is made of aluminum or an aluminum alloy. Crossbeam 10 essentially extends along a transverse direction Y, which is perpendicular to the longitudinal vehicle direction. Moreover, part of crossbeam 10 can be curved, as is known from the state of the art.

Crossbeam 10 has a front flange 12 on the side facing way from the vehicle front (not shown). Furthermore, crossbeam 10 has a rear flange 14 and two transverse walls 16 and 18, which connect front flange 12 to rear flange 14. Front flange 12, rear flange 14 and the two transverse walls 16 and 18 together form a closed profile chamber 20. In the exemplary embodiment illustrated, two reinforcing ribs 22 and 23, which are monolithic with rear flange 14 and which extend in transverse direction Y, are furthermore disposed within profile chamber 20 in the area of rear flange 14.

Additionally, it is noted that versions of crossbeam 10 are possible in which the latter has not only one (closed) profile chamber 20 but multiple profile chambers 20.

On the side of lower transverse wall 16 in Fig. 1, front flange 12 is provided with a flange-shaped extension 25 on the side facing away from profile chamber 20, flange-shaped extension 25 protruding over profile chamber 20 when viewed in a vertical direction Z of crossbeam 10. On the side facing upper transverse wall 18, front flange 12 is furthermore equipped with an additional extension 26 on the side facing away from profile chamber 20. Maximum height h of the two extensions 25 and 26 is at least 10 % of height H between the two transverse walls 16 and 18 in the area of profile chamber 20. Moreover, extensions 25 and 26 can have portions 24 of reduced height when viewed in transverse direction Y. Furthermore, extensions 25 and 26 have through holes 27 and 28 for accommodating or attaching attachments (not shown) to crossbeam 10. The two extensions 25 and 26 and front flange 12 together form a plane end face 30 of crossbeam 10 on the outer side, which faces away from profile chamber 20.

On the side facing front flange 12, the two transverse walls 16 and 18 each have an area of transition 21 at their upper and lower sides facing profile chamber 20 and extensions 25 and 26, respectively, for production-related reasons, area of transition 21 being provided with a curve R or a similar geometry, such as a radius. Area of transition 21 ends in a first portion 31, which is plane in the exemplary embodiment illustrated, on the side facing away from front flange 12, portion 31 being followed by a second portion 32, which is also plane in the exemplary embodiment illustrated, on the side facing rear flange 14. Second portion 32 is in turn connected to rear flange 14. Second portion 32 is at least essentially horizontal when crossbeam 10 is installed in the vehicle.

As is particularly clearly visible in Fig. 2, first portion 31 has a first center line 33 and second portion 32 has a second center line 34. Length I of first portion 31 is between 10% and 35% of length L of transverse walls 16 and 18 between front flange 12 and rear flange 14. The two center lines 33 and 34 are disposed at an angle α to each other, which is between 5° and 45°. In other words, this means that the two center lines 33 and 34 are not aligned with each other.

The essential aspect is that first center line 33, i.e., first portion 31, is disposed in such a manner that first center line 33 is preferably inclined exclusively in the direction of profile chamber 20 in a direction toward front flange 12 or runs in a direction away from extensions 25 and 26. As a result, a surface A of crossbeam 10, which is enclosed by front flange 12, rear flange 14 and the two transverse walls 16 and 18, decreases compared to second portion 32, which is prolonged up to front flange 12, because of the placement and/or configuration of first portion 31.

In the exemplary embodiment illustrated, second portions 32 of the two transverse walls 16 and 18 each extend at a right angle to front flange 12 and rear flange 14.

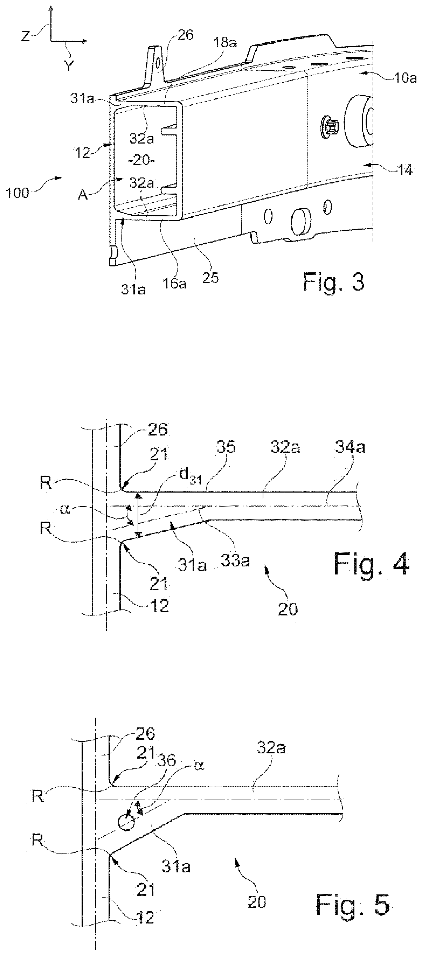

Additionally, it is noted that the cross section of crossbeam 10 according to the invention is not to be limited to such placements of second portions 32. Furthermore, it is possible for transverse walls 14 and 16 to have other portions beside the two portions 31 and 32, said other portions being disposed at an angle to second portion 32, for example. Moreover, the illustration of Fig. 2 shows that wall thicknesses d of the two portions 31 and 32 are equal and typically less than wall thickness D of front flange 12. Crossbeam 10a, which is illustrated in Figs. 3 and 4, differs from crossbeam 10 in that the cross section of first portion 31a is at least approximately triangular, wall thickness d₃₁ increasing in the direction of front flange 12. Fig. 4 shows that center line 33a of first portion 31a also runs or is disposed at angle α to second center line 34a of second portion 32a when first portion 31a is configured in this manner. The two portions 31a and 32a also form a plane outer side 35 of transverse walls 16a and 18a on the side facing away from profile chamber 20.

Fig. 5 shows a version of the cross section of crossbeam 10a in which first portion 31a is also triangular and extends at angle α to second portion 32a; however, a hollow chamber 36 of first portion 31a has a preferably circular cross section and extends in transverse direction Y.

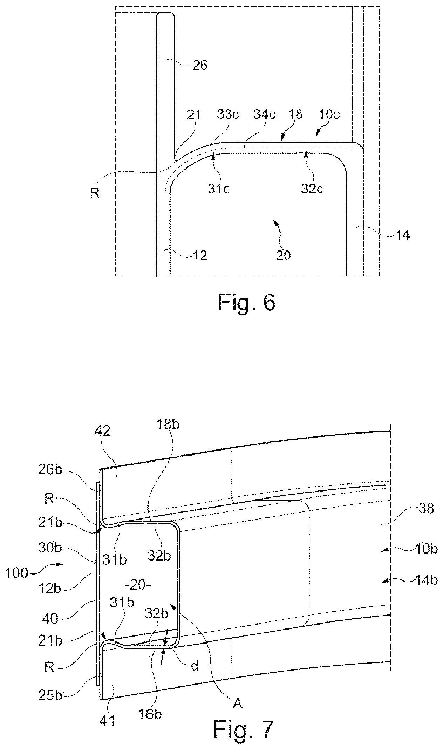

Fig. 6 shows an additional version of crossbeam 10 according to Figs. 1 and 2, in which an entire center line 33c of first portion 31c of crossbeam 10c is curved. For example, the curvature is formed by a constant radius, whereas center line 34c of second portion 32c is straight.

Additionally, it is noted that part of center line 33c of first portion 31c can also be straight. Crossbeam 10b, which is illustrated in Fig. 7, differs from crossbeams 10 and 10a in that it is not a monolithic component; instead, it is composed of two connected plate parts 38 and 40 in the exemplary embodiment illustrated. First plate part 38 forms a U-shaped cross section with rear flange 14b and the two transverse walls 16b and 18b and is additionally prolonged by strip-shaped portions 41 and 42, which extend parallel to rear flange 14b, in the area of the two extensions 25b and 26b. In the area of the two extensions 25b and 26b, first plate part 38 is connected to plane second plate part 40, preferably via welds (not shown) in the area of portions 41 and 42. Moreover, second plate part 40 forms end face 30b of front flange 12b.

The illustration of Fig. 7 further shows that portions 31b and 32b of the two transverse walls 16b and 18b have a constant wall thickness d analogously to transverse walls 16 and 18 of crossbeam 10 and are connected to portions 41 and 42 via an area of transition 21b, which has a curve R in the direction of front flange 12b. Plate parts 38 and 40 can either be made of steel or a steel alloy or be made of aluminum or an aluminum alloy.

The crossbeams 10, 10a to 10c described above can be altered or modified in various ways without departing from the spirit of the invention. For instance, second portions 32, 32a, 32b and 32c can also be partially curved.

### List of references:

- 10, 10a-10c:: crossbeam
- 12, 12b:: front flange
- 14, 14b:: rear flange
- 16, 16a, 16b:: transverse wall
- 18, 18a, 18b:: transverse wall
- 20:: profile chamber
- 21, 21b:: area of transition
- 22:: reinforcing rib
- 23:: reinforcing rib
- 24:: portion
- 25, 25b:: extension
- 26, 26b:: extension
- 27:: through hole
- 28:: through hole
- 30, 30b:: end face
- 31, 31a-31c:: first portion
- 32, 32a-32c:: second portion
- 33, 33a, 33c:: center line
- 34, 34a, 34c:: center line
- 35:: outer side
- 36:: hollow chamber
- 38:: plate part
- 40:: plate part
- 41:: portion
- 42:: portion
- 100:: crash management system

- A:: surface
- D, d, d_{31:}: wall thickness
- h:: height
- H:: height
- R:: curve
- Y:: transverse direction
- Z:: vertical direction
- I, L:: length
- A:: angle

## Claims

1. A crash management system (100) for a vehicle, the crash management system (100) comprising: a crossbeam (10; 10a; 10b; 10c), which extends at least essentially in a transverse direction (Y), the crossbeam (10; 10a; 10b; 10c) having a front flange (12; 12b), a rear flange (14; 14b), and at least two transverse walls (16; 16a; 16b, 18; 18a; 18b), which connect the front flange (12; 12b) to the rear flange (14; 14b) and form at least one closed profile chamber (20), the at least two transverse walls (16; 16a; 16b, 18; 18a; 18b) being connected at least to the front flange (12; 12b) via respective production-related areas of transition (21; 21b), which are provided with a curve (R); and at least one flange-shaped extension (25; 25b, 26; 26b), which is disposed in the area of the front flange (12; 12b) and protrudes over the transverse wall (16; 16a; 16b, 18; 18a; 18b) adjacent to the extension (25; 25b, 26; 26b) in a vertical direction (Z) of the crossbeam (10; 10a; 10b; 10c),
**characterized in that**
the transverse wall (16; 16a; 16b, 18; 18a; 18b) adjacent to the flange-shaped extension (25; 25b, 26; 26b) has a first portion (31; 31a; 31b; 31c), which is disposed on the side facing the front flange (12; 12b) and which is connected to the front flange (12; 12b) via the area of transition (21; 21b), and a second portion (32; 32a; 32b; 32c), which is essentially horizontal and adjacent to the first portion (31; 31a; 31b; 31c) in the direction of the rear flange (14; 14b), the two portions (31; 31a; 31b; 31c, 32; 32a; 32b; 32c) each having a center line (33; 33a; 33c, 34; 34a; 34c), the two center lines (33; 33a; 33c, 34; 34a; 34c) not being aligned with each other, the center line (33; 33a; 33c) of the first portion (31; 31a; 31b; 31c) preferably running exclusively in a direction of the front flange (12; 12b) away from the extension (25; 25b, 26; 26b) when viewed in a direction toward the front flange (12; 12b).

2. The crash management system according to claim 1,
**characterized in that**
the center line (33; 33a) of the first portion (31; 31a; 31b) is straight across at least 30 % of its length (I), preferably across its entire length (I).

3. The crash management system according to claim 1 or 2,
**characterized in that**
a cross-sectional surface (A) of the crossbeam (10; 10a; 10b; 10c) enclosed by the front flange (12; 12b), the rear flange (14; 14b) and the two transverse walls (16; 16a; 16b, 18; 18a; 18b) decreases compared to a second portion (32; 32a; 32b; 32c), which is prolonged up to the front flange (12; 12b), because of the placement and/or the configuration of the first portion (31; 31a; 31b; 31c) of the transverse wall (16; 16a; 16b, 18; 18a; 18b).

4. The crash management system according to any one of claims 1 to 3,
**characterized in that**
the cross section of the first portion (31a; 31b) is at least approximately triangular.

5. The crash management system according to claim 4,
**characterized in that**
the cross section of the first portion (31b) has a hollow chamber (36), which preferably has a circular cross section and extends in the transverse direction (Y) of the crossbeam (10a).

6. The crash management system according to claim 4 or 5,
**characterized in that**
the transverse wall (16a, 18a) and the second portion (32a) together form a plane outer side (35) in the first portion (31a) on the side facing away from the profile chamber (20).

7. The crash management system according to claim 1,
**characterized in that**
an angle (α) between tangents drawn to the center lines (33; 33c, 34; 34c) of the two portions (31; 31b; 31c, 32; 32c) is between 5° and 45°.

8. The crash management system according to any one of claims 1 to 7,
**characterized in that**
the second portion (32; 32a; 32b; 32c) of the transverse wall (16; 16a; 16b, 18; 18a; 18b) is disposed at a right angle to the front flange (12; 12b).

9. The crash management system according to any one of claims 1 to 8, **characterized in that**
the front flange (12) and the at least one extension (25, 26) form a plane end face (30) of the crossbeam (10; 10a; 10c).

10. The crash management system according to any one of claims 1 to 9, **characterized in that**
the height (h) of the at least one extension (25; 25b, 26; 26b) in the vertical direction (Z) is at least 10% of the height (H) of the cross section of the crossbeam (10; 10a; 10b; 10c) between the two transverse walls (16; 16a; 16b, 18; 18a; 18b).

11. The crash management system according to any one of claims 1 to 10, **characterized in that**
the length (I) of the first portion (31; 31a; 31b; 31c) is between 10 % and 35 % of the length (L) of the transverse wall (16; 16a; 16b, 18; 18a; 18b).

12. The crash management system according to any one of claims 1 to 11, **characterized in that**
the outer cross section of the crossbeam (10; 10a; 10b) is at least essentially rectangular except in the area of the at least one extension (25; 25b, 26; 26b) and the first portion (31; 31a; 31b).

13. The crash management system according to any one of claims 1 to 12, **characterized in that**
the crossbeam (10; 10a; 10c) is an extruded component and is made of aluminum or an aluminum alloy.

14. The crash management system according to any one of claims 1 to 12, **characterized in that**
the crossbeam (10b) is composed of multiple plate parts (38, 40), which are preferably connected to each other via at least one weld.

15. The crash management system according to claim 14,
**characterized in that**
the front flange (12b) is formed by a plate part (40), and another plate part (38) is connected to the front flange (12b) in the area of the front flange (12b), the other plate part (40) having an area that has a U-shaped cross section and forms the profile chamber (20) together with the front flange (12b).
